# EUROPÄISCHE PATENTSCHRIFT

(11) **EP 0 370 212 B1**
(45) Veröffentlichungstag und Bekanntmachung des Hinweises auf die Patenterteilung: **24.05.1995**
(21) Anmeldenummer: 89118494.7
(22) Anmeldetag: 05.10.1989
(51) Int. Cl.: F16B 43/00, F16B 39/26

(54) **Mutter mit Druckring**
Nut with a pressure ring
Ecrou avec anneau de serrage

(30) Priorität: 27.10.1988 DE 8813513 U
(43) Veröffentlichungstag der Anmeldung: 30.05.1990
(60) Teilanmeldung: 94117946.7
(73) Patentinhaber: Erich Neumayer GmbH & Co. KG, D-77756 Hausach (DE)
(72) Erfinder:
(74) Vertreter: Schaumburg, Thoenes & Thurn

(56) Entgegenhaltungen:
- FR-A- 1 162 040
- GB-A- 1 144 484
- LU-A- 57 109

## Beschreibung

Die Erfindung betrifft eine Mutter mit Druckring der im Oberbegriff des Anspruches 1 genannten Art.

Bei derartigen Anordnungen wird die Kraft der auf einen Schraubbolzen aufschraubbaren Mutter über den Druckring auf ein zu befestigendes Bauteil übertragen. Die kugelkalottenförmige, mit der Einsenkung in dem zu befestigenden Bauteil zusammenwirkende Unterseite des Druckringes gewährleistet eine großflächige Auflage des Druckringes auf dem Bauteil auch dann, wenn die Bolzenachse einen Kippfehler aufweist, d.h. von einer vorgesehenen Soll-Ausrichtung abweicht.

Es ist bereits bekannt, als Druckring einen mit der Mutter unverbundenen, geschlitzten Ring zu verwenden (DIN 74361, Teil 1). Im Bereich des Schlitzes hat sowohl die obere, zur Anlage an der Mutter bestimmte Druckübertragungsfläche als auch die kugelkalottenförmige Unterseite des Druckringes eine Unterbrechung, die durch verhältnismäßig scharfe Materialkanten begrenzt ist. Vor allem dann, wenn der Schlitz gemäß der oben genannten DIN-Vorschrift als Schrägschlitz ausgebildet ist, ist jeweils eine der Materialkanten an jedem Schlitzende spitzwinklig, d.h. etwa keilförmig ausgebildet. Diese Materialkanten neigen bei hohen, durch die Mutter aufgebrachten Schraubkräften dazu, sich in die jeweiligen Gegenflächen, d.h. die Druckübertragungsfläche der Mutter bzw. die kugelkalottenförmige Einsenkung des zu befestigenden Bauteils, einzugraben und diese Flächen zu beschädigen. Dadurch werden die Anzugkräfte beim Anziehen der Mutter erhöht, so daß unter Umständen das höchstzulässige, beispielsweise durch einen eingestellten Drehmomentschlüssel begrenzte Anzugmoment bereits erreicht wird, bevor die erforderliche Bolzenvorspannkraft erreicht wird. Damit ist die Gefahr verbunden, daß auch die die Mutter auf dem Bolzen sichernde Selbsthemmungskraft nicht gegeben ist, so daß sich die Mutter bei Wechselbelastungen lösen kann.

Ein weiterer Nachteil der bekannten Lösung wird auch darin gesehen, daß der Druckring ein von der Mutter getrenntes Bauteil ist. Dadurch wird einerseits die Montage erschwert, da der Monteur vor dem Aufschrauben der Mutter den Druckring auf den Bolzen fädeln muß. Außerdem besteht die Gefahr, daß der Monteur entweder keinen oder nicht den richtigen Druckring montiert. In beiden Fällen entsteht eine unvollkommene bzw. fehlerhafte Befestigung. Außerdem besteht immer die Gefahr, daß derartige Druckringe verloren gehen, so daß vor allem im Reparaturbetrieb außerhalb gut eingerichteter Werkstätten eine korrekte Montage erschwert oder unmöglich werden kann.

Außerdem besteht bei geschlitzten Druckringen immer die Gefahr, daß bei ungenauer Abstimmung der Schlitzbreite der Druckring sich kragenartig um den Bolzen legt, bevor sich der Schlitz schließt, so daß er auf dem Bolzen axial/radial festgelegt ist und seine Druckübertragungsaufgabe nicht mehr lösen kann. Weiter kann ein Ausgleich eines Lagefehlers der Bohrungen (16) zueinander nicht erfolgen. Bei Kegel- und Kegelbundmuttern kann ein Lagefehler mehrerer Bohrungen zueinander nicht ohne zusätzliche Biegebeanspruchungen auf die Schraube aufgenommen werden.

Aus der GB-A-1 144 484 ist eine Mutter mit Druckring bekannt, deren Druckübertragungsflächen konisch ausgebildet sind, um eine Zentrierung zwischen Mutter und Druckring zu erreichen. Da durch die Kugelkalottenfläche ebenfalls eine Zentrierung zwischen Druckring und dem zu befestigenden Teil erfolgt, werden die Mutter und der Druckring einerseits sowie das zu befestigende Teil andererseits stets zum Bolzen hin zentriert.

Es ist Aufgabe der vorliegenden Erfindung, eine Mutter mit Druckring der im Oberbegriff des Anspruches 1 genannten Art zu schaffen, die eine einfache und sichere Montage erlaubt, wobei insbesondere eindeutige, reproduzierbare Anzugskräfte gewährleistet sind.

Diese Aufgabe ist erfindungsgemäß durch die im Anspruch 1 enthaltenen Merkmale gelöst.

Der Druckring ist als geschlossener Ring ausgebildet. Dadurch entfallen scharfe Materialkanten, die die Druckübertragungsflächen zerstören können. Zusätzlich ist erfindungsgemäß vorgesehen, daß zumindest eine der einander zugewandten Druckübertragungsflächen der Mutter bzw. des Druckringes gemustert, d.h. mit Schmiermitteltaschen versehen ist. Auf die gemusterte Druckübertragungsfläche läßt sich ein Schmierfilm aufbringen, der dauerhaft wirksam bleibt. Im Gegensatz dazu würden die Materialkanten eines geschlitzten Druckringes gemäß der oben genannten DIN-Vorschrift oder die durch diese Materialkanten verursachten Beschädigungen an der Druckübertragungsfläche der Mutter jeden Schmierfilm zerstören und von den Druckübertragungsflächen abstreifen. Wenn jedoch zwischen den Druckübertragungsflächen ein wirksamer Schmierfilm vorhanden ist, dann geht im wesentlichen kein Anteil des Anzugs-Drehmomentes durch Reibung zwischen diesen Druckübertragungsflächen verloren, so daß das gesamte Anzugs-Drehmoment für die Erzeugung einer eindeutigen, bestimmbaren und jederzeit reproduzierbaren Bolzenspannung zur Verfügung steht.

Der Druckring ist gemäß der Erfindung unverlierbar mit der Mutter verbunden; da der Druckring seine Form und Größe immer, d.h. auch unter großer Belastung, beibehält, können die Mittel zum Verbinden des Druckringes mit der Mutter sehr einfach ausgebildet sein, d.h., ein Lösen des Druckringes von der Mutter einerseits oder ein spielfreier Sitz des Druckringes an der Mutter andererseits infolge einer Durchmesserveränderung des Druckringes ist nicht zu befürchten.

Die Mittel zum Verbinden von Mutter und Druckring sind gemäß einer Ausgestaltung der Erfindung durch jeweils einen an einem ersten dieser beiden Elemente angeordneten Bördelrand gebildet, welcher einen am jeweils zweiten Element angeordneten Umfangsflansch mit radialem und axialem Spiel übergreift. Bördelrand und Umfangsflansch können jeweils an Innenumfängen oder auch an Außenumfängen der beiden Elemente angeordnet sein, wie anhand der Ausführungsbeispiele noch erläutert wird. Außerdem ist vorgesehen, den Bördelrand jeweils an dem Element anzuordnen, welches aus dem weicheren Material besteht. In bevorzugter Ausgestaltung ist der Druckring aus einem sehr harten Material, die Mutter aus einem weicheren Material gebildet, so daß der Bördelrand vorzugsweise an der Mutter vorgesehen ist.

Bei einer anderen Ausgestaltung der Erfindung sind die Mittel zum Verbinden von Mutter und Druckring durch einen gesonderten Klemmerring gebildet, der einen an jedem der beiden Elemente ausgebildeten Umfangsflansch übergreift. Da der Klammerring nicht direkt mit einem der beiden Elemente einstückig verbunden ist, können diese Elemente unabhängig von den Erfordernissen einer Verformbarkeit jeweils aus dem für sie günstigsten Material hergestellt sein.

Um ein Klappern des Klammerringes auszuschließen, ist erfindungsgemäß vorgesehen, daß dieser Klammerring jeweils auf einem der beiden Elemente spielfrei zentriert ist und das jeweils andere Element mit dem geforderten seitlichen Spiel umgibt.

In weiterer Ausgestaltung der Erfindung ist vorgesehen, daß der Druckring einen Innendurchmesser hat, der um eine vorgegebene Toleranz größer als der Gewindenenndurchmesser des Bolzengewindes ist. Diese Toleranz erlaubt einen exzentrischen Versatz des Druckringes gegenüber der Mutter und dem Bolzen und damit einen Ausgleich eines seitlichen Versatzes zwischen dem Bolzen und dem Bolzenloch des zu befestigenden Teiles infolge von Fertigungsungenauigkeiten. Bei Kegelmuttern und Kugelbundmuttern ist dieser Ausgleich nicht möglich.

Die aneinanderliegenden Druckübertragungsflächen von Mutter und Druckring sind vorzugsweise rechtwinklig zur Mutternachse ausgerichtet.

Mehrere Ausführungsbeispiele sind in der Zeichnung dargestellt und im folgenden näher beschrieben. Es zeigen:
- Figur 1: eine Mutter mit Druckring, wobei am Außenumfang der Mutter ein Bördelrand angeordnet ist;
- Figur 2: eine Mutter mit Druckring, wobei am Außenumfang des Druckringes ein Bördelrand angeordnet ist;
- Figur 3: eine Mutter mit Druckring, wobei am Innenumfang der Mutter ein Bördelrand angeordnet ist;
- Figur 4: eine Mutter mit Druckring und einem gesonderten, mutternzentrierten Klammerring;
- Figur 5: eine Mutter mit Druckring und einem gesonderten, druckringzentrierten Klammerring.

Die Figuren zeigen jeweils ein erstes Bauteil 2, an welchem auf eine beliebige, nicht näher dargestellte Weise ein Schraubbolzen 4 befestigt ist. An dem ersten Bauteil 2 soll ein zweites Bauteil 6 mittels einer Mutter mit Druckring angeschraubt werden.

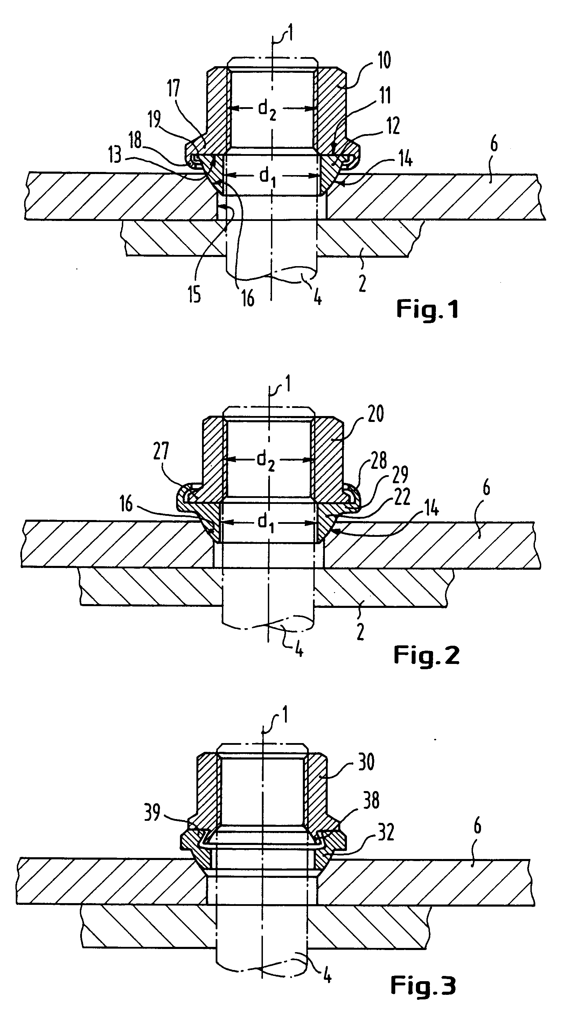

Figur 1 zeigt eine Mutter 10, die auf den Schraubbolzen 4 aufschraubbar ist, sowie einen Druckring 12, welcher die von der Mutter 10 aufgebrachte Kraft auf das Bauteil 6 überträgt. Der Druckring 12 weist eine kugelkalottenförmige Unterseite 14 auf, die in eine dazu komplementäre, die Durchtrittsöffnung 15 für den Schraubbolzen 4 umgebende Einsenkung 16 eingreift. Die Mutter 10 ist mit einem Umfangsflansch 17 versehen, welcher sich in axialer Richtung in einem Bördelrand 18 fortsetzt. Der Bördelrand 18 übergreift einen am Druckring 12 ausgebildeten Umfangsflansch 19.

Wie Figur 1 erkennen läßt, übergreift der Bördelrand 18 den Umfangsflansch 19 mit axialem und radialem Spiel. Dadurch wird sichergestellt, daß die Mutter 10 und der Druckring 12 relativ zueinander verdrehbar und quer zur Mutternachse 1 verschiebbar sind. Außerdem hat der Druckring 12 einen Innendurchmesser d₁, welcher um ein vorgegebenes Toleranzmaß größer als der Gewindenenndurchmesser d₂ der Mutter ist. Das radiale Spiel zwischen dem Bördelrand 18 und dem Umfangsflansch 19 einerseits und die Differenz zwischen den Durchmessern d₁ und d₂ andererseits ermöglichen einen exzentrischen Versatz des Druckringes 12 gegenüber der Mutter 10, wenn beispielsweise infolge von Fertigungsungenauigkeiten die Durchtrittsöffnung 15 mit der Einsenkung 16 gegenüber dem Schraubbolzen 4 radial versetzt angeordnet sind. Die kalottenförmige Ausbildung der Unterseite 14 des Druckringes 12 einerseits und der Einsenkung 16 andererseits ermöglichen außerdem den Ausgleich eines Kippfehlers des Schraubbolzens 4 gegenüber dem zu befestigenden Bauteil 6.

Figur 2 zeigt eine Mutter 20 und einen Druckring 22. Mit einem Umfangsflansch 29 des Druckringes 22 ist ein Bördelrand 28 einstückig verbunden. Der Bördelrand 28 übergreift einen an der Mutter 20 ausgebildeten Umfangsflansch 27 mit axialem und radialem Spiel, so daß der Druckring 22 mit der Mutter unverlierbar verbunden ist, andererseits jedoch eine Drehung des Druckringes 22 um die Mutternachse 1 sowie eine Verschiebung quer zur Mutternachse 1 möglich sind.

Die Ausbildung der kugelkalottenförmigen Unterseite 14 und der dazu komplementären Einsenkung 16 des Bauteiles 6 sowie die Differenzen der Innendurchmesser d₁ und d₂ entsprechen der anhand der Figur 1 schon beschriebenen Konfiguration, so daß hierauf nicht nochmals näher eingegangen zu werden braucht.

Figur 3 zeigt ein Ausführungsbeispiel, bei welchem an der Mutter 30 ein Bördelrand 38 angeordnet ist, welcher einen am Innenumfang des Druckringes 32 ausgebildeten, nach innen vorspringenden Umfangsflansch 39 übergreift. Auch in diesem Ausführungsbeispiel ist wieder ein axiales und radiales Spiel zwischen dem Bördelrand 38 und dem Umfangsflansch 39 vorgesehen, so daß der Druckring 32 sich um die Mutternachse 1 drehen und quer dazu verschieben kann.

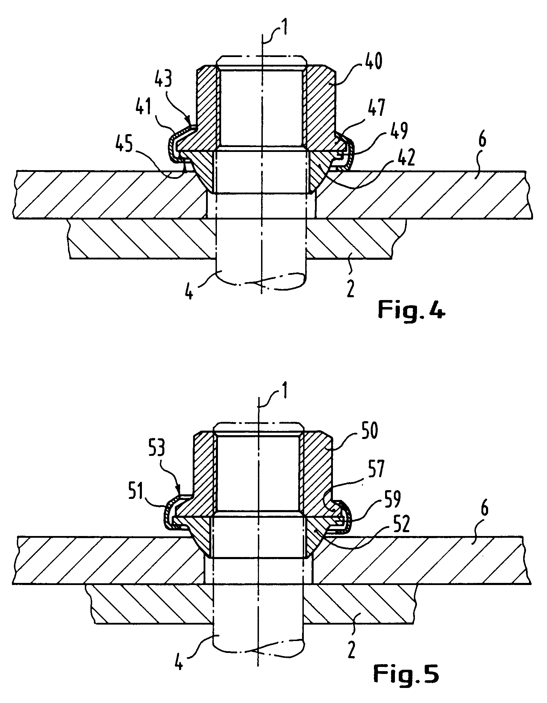

Figur 4 zeigt ein Ausführungsbeispiel, bei welchem die mit einem Umfangsflansch 47 versehene Mutter 40 und der mit einem Umfangsflansch 49 versehene Druckring 42 durch einen beide Umfangsflansche 47, 49 übergreifenden Klammerring 41 unverlierbar miteinander verbunden sind. Der Klammerring 41 hat zwei nach innen eingeschlagene Stirnkanten 43, 45. In dem in Figur 4 dargestellten Ausführungsbeispiel umgibt die der Mutter 40 zugeordnete Stirnkante 43 die Mutter im wesentlichen spielfrei, wie in Figur 4 rechts dargestellt ist. Die dem Druckring 42 zugeordnete Stirnkante 45 umgibt diesen mit radialem Spiel, so daß eine Verschiebung des Druckringes 42 quer zur Mutternachse 1 möglich ist. Außerdem ist der axiale Abstand der Stirnkanten 43 und 45 so bemessen, daß der Druckring 42 und die Mutter 40 auch in axialer Richtung zueinander beweglich bleiben. Die Passung zwischen dem Klammerring 41 und der Mutter 40 kann so bemessen sein, daß der Klammerring 41 reibschlüssig und damit klapperfrei an der Mutter 40 anliegt.

Figur 5 zeigt ein Ausführungsbeispiel ähnlich dem in Figur 4 dargestellten Ausführungsbeispiel. Die Mutter 50 und der Druckring 52 sind durch einen Klammerring 51 unverlierbar miteinander verbunden. Der Klammerring 51 übergreift einerseits den an der Mutter 50 ausgebildeten Umfangsflansch 57 und andererseits den am Druckring 52 ausgebildeten Umfangsflansch 59. Der Umfangsflansch 59 hat einen größeren Durchmesser als der Umfangsflansch 57; der Klammerring 51 ist so bemessen, daß er in radialer Richtung im wesentlichen spielfrei am Umfangsflansch 59 anliegt und demzufolge zum Druckring 52 zentriert ist. Die obere, der Mutter 50 zugeordnete Stirnkante 53 umgibt die Mutter 50 mit radialem Spiel, so daß eine Bewegung des Druckringes 52 gegenüber der Mutter 50 quer zur Mutternachse 1 möglich ist.

Bei allen Ausführungsbeispielen sind die Umfangsflansche der Mutter und des Druckringes jeweils an den einander zugewandten Enden der Elemente ausgebildet und bilden unmittelbar die Druckübertragungsflächen. Auf diese Weise sind die Druckübertragungsflächen relativ groß, woraus sich eine geringe Flächenpressung ergibt.

Wie bereits weiter vorne beschrieben wurde, ist jeweils eine Druckübertragungsfläche, vorzugsweise die Druckübertragungsfläche 13 der Mutter 10, in einer an sich bekannten Weise mit Schmiermitteltaschen versehen. Das kann beispielsweise durch Kugelstrahlen dieser Druckübertragungsfläche 13 erreicht werden. Dadurch erreicht man, daß die Druckübertragungsfläche 13 mit einem dauerhaften Schmierfilm versehen werden kann, wodurch die Reibung zwischen der Mutter und dem Druckring möglichst gering gehalten und eine Verfälschung des Anzugs-Drehmomentes beim Festziehen der Schrauben vermieden wird.

Die mit der Druckübertragungsfläche 13 zusammenwirkende Druckübertragungsfläche 11 des Druckringes ist beispielsweise feingedreht oder geschliffen.

Eine gleiche günstige Paarung ergibt sich, wenn umgekehrt die Druckübertragungsfläche 11 gestahlt und die Druckübertragungsfläche 13 feingedreht oder geschliffen ist.

## Patentansprüche

1. Mutter mit Druckring, wobei der Druckring mit einer kugel-kalottenförmigen Unterseite für den Eingriff in eine dazu komplementäre Einsenkung in einem zu befestigenden Bauteil versehen ist, wobei ferner der Druckring (12) ein geschlossener Ring ist und wobei Mittel (18, 19) vorgesehen sind für eine unverlierbare Verbindung der Mutter (10) mit den Druckring (12) derart, daß diese relativ zu einander um die Mutternachse (1) verdrehbar und quer zur Mutternachse (1) verschiebbar sind, dadurch gekennzeichnet, daß jeweils eine (13) der Druckübertragungsflächen zur Ausbildung von Schmiermitteltaschen kugelgestrahlt und die jeweils andere Druckübertragungsfläche (11) feingedreht ist.

2. Mutter mit Druckring nach Anspruch 1, dadurch **gekennzeichnet**, daß die Mittel zum Verbinden von Mutter (10) und Druckring (12) durch jeweils einen an einem ersten (10) dieser beiden Elemente angeordneten Bördelrand (18) gebildet sind, welcher einen am jeweils zweiten Element (12) angeordneten Umfangsflansch (19) mit radialem und axialem Spiel übergreift.

3. Mutter mit Druckring nach Anspruch 2, dadurch **gekennzeichnet**, daß der Bördelrand (18) eine Fortsetzung eines am jeweils ersten Element (10) ausgebildeten Umfangsflansches (17) ist.

4. Mutter mit Druckring nach Anspruch 3, dadurch **gekennzeichnet**, daß die Umfangsflansche (17,19) der Mutter (10) und des Druckringes (12) jeweils an den einander zugewandten Enden dieser beiden Elemente ausgebildet sind und die Druckübertragungsflächen (11,13) bilden.

5. Mutter mit Druckring nach Anspruch 1, dadurch **gekennzeichnet**, daß die Mittel zum Verbinden von Mutter (40) und Druckring (42) durch einen Klammerring (41) gebildet sind, welcher jeweils einen an jedem der beiden Elemente (40,42) ausgebildeten Umfangsflansch (47,49) übergreift.

6. Mutter mit Druckring nach Anspruch 5, dadurch **gekennzeichnet**, daß der Klammerring (41) jeweils auf einem (40) der beiden Elemente (40,42) spielfrei zentriert ist und das andere Element (42) mit seitlichem Spiel umgibt.

7. Mutter mit Druckring nach Anspruch 5 oder 6, dadurch **gekennzeichnet**, daß der Klammerring (41) aus Federstahl besteht.

8. Mutter mit Druckring nach einem der Ansprüche 1 bis 7, dadurch **gekennzeichnet**, daß der Druckring (12) einen Innendurchmesser (d₁) hat, der um eine vorgegebene Toleranz größer als der Gewindenenndurchmesser (d₂) der Mutter (10) ist.

9. Mutter mit Druckring nach einem der Ansprüche 1 bis 8, dadurch **gekennzeichnet**, daß die Druckübertragungsflächen (11,13) der beiden Elemente (10,12) rechtwinklig zur Mutterachse (1) ausgerichtet sind.

10. Mutter mit Druckring nach einem der Ansprüche 1 bis 9, dadurch **gekennzeichnet**, daß die kalottenförmige Unterseite (14) des Druckringes (12) einen auf der Schraubenmutterachse (1) liegenden Kalottenmittelpunkt hat.

11. Mutter mit Druckring nach einem der Ansprüche 1 bis 10, dadurch **gekennzeichnet**, daß zumindest eine (13) der einander zugewandten Druckübertragungsflächen der Mutter (10) bzw. des Druckringes (12) gemustert (mit Schmiermittel versehen) ist.

## Claims

1. A nut with a thrust collar, the thrust collar being provided with a part-spherical underside for engagement in a matching recess in a component for fixing, the thrust collar (12) being a closed ring and means (18, 19) being provided for captive connection of the nut (10) to the thrust collar (12) in such manner that they are displaceable transversely of the nut axis and rotatable about the nut axis (1) relatively to one another, characterised in that one (13) of the thrust transmission surfaces is shot-blasted to form lubricant pockets while the other thrust transmission surface (11) is precision turned.

2. A nut with a thrust collar according to claim 1, characterised in that the means for connecting the nut (10) and thrust collar (12) are formed by respectively a beaded edge (18) disposed on a first one (10) of the said two elements, said edge engaging with radial and axial clearance over a peripheral flange (19) provided on the respective second element (12).

3. A nut with a thrust collar according to claim 2, characterised in that the beaded edge (18) is a continuation of a peripheral flange (17) formed on the respective first element (10).

4. A nut with a thrust collar according to claim 3, characterised in that the peripheral flanges (17, 19) of the nut (10) and of the thrust collar (12) are respectively formed at the facing ends of these two elements and form the thrust transmission surfaces (11, 13).

5. A nut with a thrust collar according to claim 1, characterised in that the means for connecting the nut (40) and the thrust collar (42) are formed by a clamp ring (41) which respectively engages over a peripheral flange (47, 49) formed on each of the two elements (40, 42).

6. A nut with a thrust collar according to claim 5, characterised in that the clamp ring (41) respectively is centred so as to be free from play on one (40) of the two elements (40, 42) and surrounds the other element (42) with lateral clearance.

7. A nut with a thrust collar according to claim 5 or 6, characterised in that the clamp ring (41) consists of spring steel.

8. A nut with a thrust collar according to any one of claims 1 to 7, characterised in that the thrust collar (12) has an inside diameter (d₁) which is larger by a predetermined tolerance than the screwthreaded inside diameter (d₂) of the nut (10).

9. A nut with a thrust collar according to any one of claims 1 to 8, characterised in that the thrust transmission surfaces (11, 13) of the two elements (10, 12) are aligned at right angles to the nut axis (1).

10. A nut with a thrust collar according to any one of claims 1 to 9, characterised in that the part-spherical underside (14) of the thrust collar (12) has a sphere centre situated on the screw nut axis (1).

11. A nut with a thrust collar according to any one of claims 1 to 10, characterised in that at least one (13) of the facing thrust transmission surfaces of the nut (10) and of the thrust collar (12) is patterned (provided with lubricant).

## Revendications

1. Ecrou avec anneau de pression, l'anneau de pression étant doté d'une face inférieure en forme de calotte sphérique pour l'engagement dans une creusure de forme complémentaire pratiquée dans une pièce à fixer, l'anneau de pression (12) étant en outre un anneau fermé, et des moyens (18, 19) étant prévus pour une liaison imperdable de l'écrou (10) à l'anneau de pression (12) agencée de telle sorte que ces éléments sont à rotation relative autour de l'axe (1) de l'écrou et à translation relative transversalement à l'axe (1) de l'écrou, caractérisé en ce qu'une (13) des faces respectives de transmission de pression est grenaillée afin de former des poches de lubrifiant, et l'autre face respective (11) de transmission de pression est usinée au tour de précision.

2. Ecrou avec anneau de pression selon la revendication 1, caractérisé en ce que les moyens pour assembler l'écrou (10) et l'anneau de pression (12) consistent en un bord rabattu (18) qui est agencé sur un premier (10) de ces deux éléments et engage en recouvrement, avec jeu radial et axial, un collet périphérique (19) agencé sur le second élément (12).

3. Ecrou avec anneau de pression selon la revendication 2, caractérisé en ce que le bord rabattu (18) est un prolongement d'un collet périphérique (17) configuré sur ledit premier élément (10).

4. Ecrou avec anneau de pression selon la revendication 3, caractérisé en ce que les collets périphériques (17, 19) de l'écrou (10) et de l'anneau de pression (12) sont respectivement configurés aux extrémités de ces deux éléments qui sont tournées l'une vers l'autre, et ils forment les faces de transmission de pression (11, 13).

5. Ecrou avec anneau de pression selon la revendication 1, caractérisé en ce que les moyens pour assembler l'écrou (40) et l'anneau de pression (42) consistent en un anneau de cramponnage (41) qui engage respectivement en recouvrement deux collets périphériques (47, 49) configurés chacun sur un des deux éléments (40, 42).

6. Ecrou avec anneau de pression selon la revendication 5, caractérisé en ce que l'anneau de cramponnage (41) est centré sans jeu sur l'un (40) des deux éléments (40, 42) et entoure avec jeu latéral l'autre élément (42).

7. Ecrou avec anneau de pression selon la revendication 5 ou 6, caractérisé en ce que l'anneau de cramponnage (41) est réalisé en acier à ressorts.

8. Ecrou avec anneau de pression selon l'une des revendications 1 à 7, caractérisé en ce que l'anneau de pression (12) présente un diamètre intérieur (d₁) qui est supérieur d'une tolérance prédéfinie au diamètre nominal de filetage (d₂) de l'écrou (10).

9. Ecrou avec anneau de pression selon l'une des revendications 1 à 8, caractérisé en ce que les faces de transmission de pression (11, 13) des deux éléments (10, 12) sont orientées perpendiculairement à l'axe (1) de l'écrou.

10. Ecrou avec anneau de pression selon l'une des revendications 1 à 9, caractérisé en ce que le centre de calotte de la face inférieure (14) en forme de calotte sphérique de l'anneau de pression (12) est situé sur l'axe (1) de l'écrou.

11. Ecrou avec anneau de pression selon l'une des revendications 1 à 10, caractérisé en ce qu'au moins une (13) des faces de transmission de pression en vis-à-vis de l'écrou (10) ou de l'anneau de pression (12), est gaufrée (pour la doter de poches de lubrifiant).
